# EUROPEAN PATENT APPLICATION

(11) **EP 2 378 477 A2**
(43) Date of publication of application: **19.10.2011**
(21) Application number: 11162564.6
(22) Date of filing: 15.04.2011
(51) Int. Cl.: G06Q 10/00

(54) **Personalized information service method and information platform**

(30) Priority: 15.04.2010 US 324303 P; 14.04.2011 US 87370
(71) Applicant: HTC Corporation, Taoyuan County 330 (TW)
(72) Inventor: Yeh Pai-Chang, Taoyuan City, Taoyuan County 330 (TW); Lee Po-Yen, Taoyuan City, Taoyuan County 330 (TW); Chen, Chien-Wen, Taoyuan City, Taoyuan County 330 (TW); Lian Li-Wen, Taoyuan City, Taoyuan County 330 (TW)
(74) Representative: 2K Patentanwälte Blasberg Kewitz & Reichel

(57) **Abstract**

A personalized information service method for an information platform having several subscribers is provided. Each subscriber uses a portable device to communicate with the information platform, and the information platform stores several personalized behavior models respectively corresponding to the subscribers. For each subscriber, the personalized information service comprises the steps of collecting operating information related to the subscriber operating the portable device, and transmitting the operating information to the information platform. The information platform analyzes the operating information to adjust the personalized behavior model corresponding to the subscriber.

## Description

### Field of the Invention

The invention relates to an information service method and an information platform. Particularly, the invention relates to a personalized information service method and an information platform providing a personalized information service.

### Description of Related Art

To cope with modem busy lifestyle, various portable electronic devices with less space occupation are continually developed. Taking a handheld communication device such as a personal digital assistant (PDA) mobile phone or a smart phone as an example, besides a main screen page thereon displays various functions of a conventional communication device, it also includes a plurality of control pages listing a plurality of applet graphical interface controllers, where these applet graphical interface controllers are respectively system inbuilt programs or files or third-party files purchased and download by a user, for example, game software, video software or e-books, etc., which allows the user to write documents, send and receive emails, browse websites, or use instant messaging software by clicking these interface controllers. Namely, such handheld communication device is not only used for making phone calls, but is also used to provide diversified functions as that does of a small personal computer. With development of wireless network technology, utilization of these functions is no longer limited by space and time, which is convenient for those modem people constantly pursuing efficiency.

Presently, many service providers provide users with an information platform, so as to provide the users various information including life information, consumption information or file download information, etc. through the information platform. Therefore, the information platform has become an alternative marketing channel other than multimedia such as physical billboards and television broadcasting, etc. Generally, the information platform transmits various information to handheld electronic devices of the users through messages or emails to achieve sales promotion, though is may cause that the user's handheld electronic device receives a large amount of unnecessary advertising messages, so that the user is incessantly bothered by all kinds of advertisings.

### SUMMARY OF THE INVENTION

The invention is directed to a personalized information service method, which can provide subscribers personalized information.

The invention is directed to an information platform, which can provide subscribers desired information according to an operating mode that the subscriber operates a portable device.

The invention provides a personalized information service method for an information platform having a plurality of subscribers, where each of the subscribers uses a portable device to communicate with the information platform through a communication connection and the information platform stores a plurality of personalized behavior models respectively corresponding to the subscribers. For each subscriber, the personalized information service method comprises the following steps. The portable device collects operating information related to the subscriber operating the portable device, where the operating information comprises at least a time-based event record. The portable device transmits the operating information to the information platform through the communication connection. The information platform analyses the operating information of the subscriber to adjust the personalized behavior model corresponding to the subscriber.

In an embodiment of the invention, the personalized information service further includes following steps. The information platform searches at least one exclusive information from an information database according to the personalized behavior model, where an exclusive information occurrence time of the exclusive information corresponds to the time-based event record. The information platform transmits the exclusive information to at least one of the portable devices respectively corresponding to the subscribers through the communication connection according to the time-based event record.

In an embodiment of the invention, the step that the information platform transmits the exclusive information to at least one of the portable devices respectively corresponding to the subscribers comprises the information platform transmitting the exclusive information to the portable device corresponding to the subscriber.

In an embodiment of the invention, the step that the information platform transmits the exclusive information to at least one of the portable devices respectively corresponding to the subscribers comprises the information platform transmitting the exclusive information to at least one of the portable devices respectively corresponding to other subscribers in a same community group with the subscriber.

In an embodiment of the invention, the operating information further comprises a user location information-based event record, and an occurrence location of the exclusive information corresponds to the user location information-based event record.

In an embodiment of the invention, the personalized information service further comprises a following step. The information platform analyses the adjusted personalized behavior models respectively corresponding to the subscribers belonged to a community group, so as to adjust a common behavior model commonly corresponding to the subscribers belonged to the community group.

In an embodiment of the invention, the personalized information service further comprises following steps. The information platform searches at least one group information from the information database according to the common behavior model. The information platform transmits the group information to the portable devices respectively corresponding to the subscribers commonly belonged to the community group through the communication connection.

In an embodiment of the invention, a group information occurrence time of the group information simultaneously corresponds to the time-based event records of the subscribers commonly belonged to the community group.

The invention provides an information platform having a plurality of subscribers, and the information platform comprises a communication interface, a storage medium and a processor. The storage medium is used for storing at least one information database, a subscriber database and a computer program product, where the subscriber database comprises a plurality of personalized behavior models respectively corresponding to the subscribers. The processor receives operating information related to at least one of the subscribers operating a portable device that is transmitted by the portable device used by the subscriber through the communication interface, and the processor executes a plurality of instructions of the computer program product, where the instructions comprise following steps. The operating information of the subscriber is analysed to adjust the personalized behavior model corresponding to the subscriber. At least one exclusive information is searched from the information database according to the personalized behavior model, where an exclusive information occurrence time of the exclusive information corresponds to the time-based event record. The exclusive information is transmitted to at least one of the portable devices respectively corresponding to the subscribers through the communication interface according to the time-based event record.

In an embodiment of the invention, the instruction for transmitting the exclusive information to at least one of the portable devices respectively corresponding to the subscribers comprises transmitting the exclusive information to the portable device corresponding to the subscriber.

In an embodiment of the invention, the instruction for transmitting the exclusive information to at least one of the portable devices respectively corresponding to the subscribers comprises transmitting the exclusive information to at least one of the portable devices respectively corresponding to other subscribers in a same community group with the subscriber.

In an embodiment of the invention, the operating information further comprises a user location information-based event record, and an occurrence location of the exclusive information corresponds to the user location information-based event record.

In an embodiment of the invention, the instructions further comprise following steps. The adjusted personalized behavior models respectively corresponding to the subscribers belonged to a community group are analysed to adjust a common behavior model commonly corresponding to the subscribers belonged to the community group. At least one group information is searched from the information database according to the common behavior model. The group information is transmitted to the portable devices respectively corresponding to the subscribers belonged to the community group through the communication interface.

In an embodiment of the invention, a group information occurrence time of the group information simultaneously corresponds to the time-based event records of the subscribers belonged to the community group.

According to the above descriptions, in the personalized information service method of the invention, digital operation information is generated based on various behavior modes that the subscriber of the information platform uses the portable device or the user-related trip record, and the information platform analyses the operating information of each subscriber to periodically or non-periodically modify the personalized behavior models belonged to the subscribers, so that the personalized behavior models are more close to real daily activities, activity arrangements and object preferences of the subscribers. The information platform further predicts various activities and preferences of the subscribers according to the personalized behavior models belonged to the subscribers, so as to provide personalized information to a single subscriber or group exclusive information to group subscribers in advance. Since the information provided by the information platform is personalized and targeted, the provided information is more suitable for the subscribers, so that advertising effectiveness of the information serving as the advertising medium can be greatly improved, and the user can avoid being incessantly bothered by unnecessary information.

In order to make the aforementioned and other features and advantages of the invention comprehensible, several exemplary embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a flowchart illustrating a method for adjusting a behavior model in a personalized information service method according to an embodiment of the invention.

FIG. 2 is a flowchart illustrating a method for automatic information providing in the personalized information service method according to an embodiment of the invention.

FIG. 3 is a flowchart illustrating a method for establishing a behavior model in the personalized information service method according to an embodiment of the invention.

FIG. 4 is a schematic diagram of an information platform according to an embodiment of the invention.

### DETAILED DESCRIPTION OF DISCLOSED EMBODIMENTS

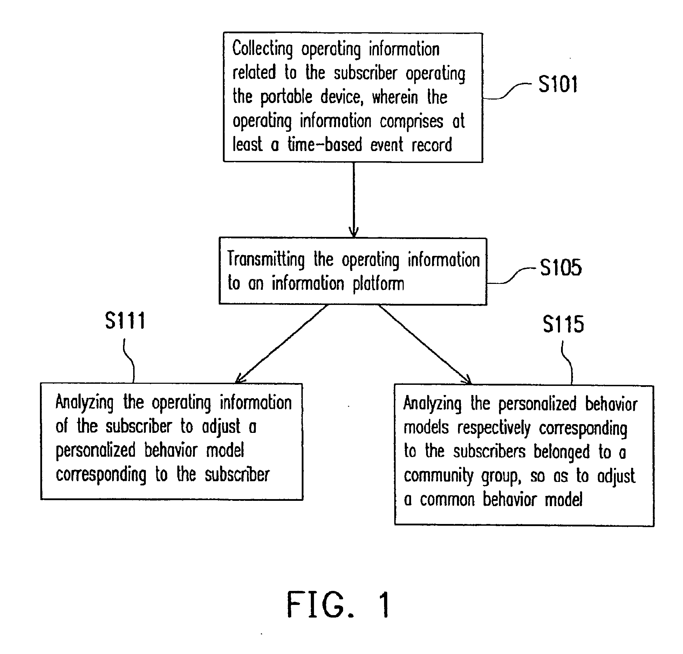

A personalized information service of the invention is adapted to an information platform having a plurality of subscribers. Each subscriber uses a portable device to communicate with the information platform through a communication connection, and the information platform stores a plurality of personalized behavior models respectively corresponding to the subscribers. The portable device is, for example, a portable computer, a personal digital assistant (PDA) or a mobile phone. FIG. 1 is a flowchart illustrating a method for adjusting a behavior model in the personalized information service method according to an embodiment of the invention. Referring to FIG. 1, for each subscriber, the personalized information service method includes adjusting the behavior model. In detail, in step S101, the portable device collects operating information related to the subscriber operating the portable device. Namely, while the subscriber operates the portable device, the portable device digitalizes operating behaviors that the subscriber uses various functions of the portable device (including phone calls, call and message objects, call durations, a connection between the call durations and the call objects, a connection between a call frequency of a same call object and the call objects, an Internet connecting frequency and connecting time points and duration of the connections, a query frequency of a same webpage, time points and a frequency of using application software, a calendar content, a content of a event notification record, time points of playing audio and video files or multimedia files and various operating behaviors) into the operating information, where the operating information includes at least a time-based event record, for example, a calendar or an event notification record.

Then, in step S105, the portable device transmits the collected operating information to the information platform through the communication connection. Then, in step S111, the information platform analyses the operating information of the subscriber to adjust the personalized behavior model corresponding to the subscriber. Namely, the portable device periodically or non-periodically collects the operating information related to the subscriber operating the portable device, and periodically or non-periodically transmits the operating information to the information platform, and the information platform analyses the received operating information to adjust the personalized behavior model corresponding to the subscriber, so that the adjusted personalized behavior model is more close to general operating behaviors and habits of the individual subscriber, and predicts possible activities within a specific time section of the subscriber and the required information according to the personalized behavior model.

In an embodiment, the method for adjusting the behavior model further includes a step S115, by which the information platform analyses the adjusted personalized behavior models respectively corresponding to the subscribers belonged to a community group, so as to adjust a common behavior model commonly corresponding to the subscribers belonged to the community group. The common behavior model is, for example, a common working time record, common routines and common preferences of the members of the community group. In other words, in the information platform, a part of the subscribers is belonged to the community group, and the information platform further analyses the adjusted personalized behavior models respectively corresponding to the subscribers belonged to the community group, so as to adjust the common behavior model commonly corresponding to the subscribers belonged to the community group. In this way, the common behavior model is more close to a collective behavior model (including dining time of the members, collective outings of the members and collective preferences of the members, etc.) of all of the members of the community group.

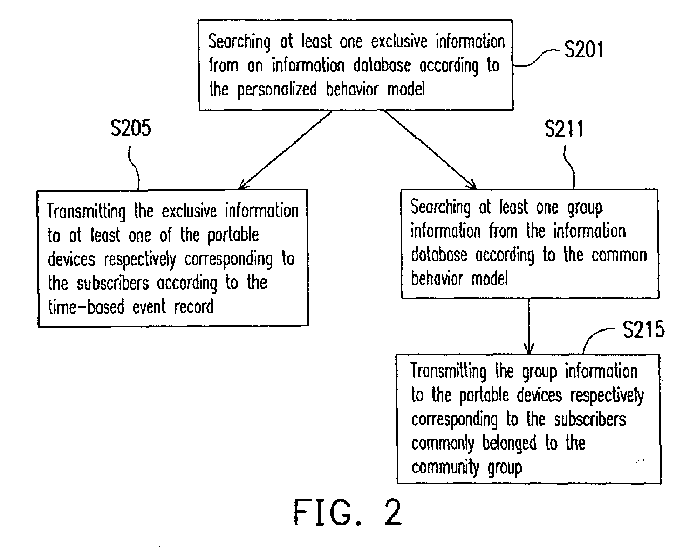

FIG. 2 is a flowchart illustrating a method for automatic information providing in the personalized information service method according to an embodiment of the invention. In FIG. 2, in another embodiment, the personalized information service further includes automatic information providing. In detail, in step S201, the information platform searches at least one exclusive information from an information database according to the stored personalized behavior models. The information database is, for example, stored in the information platform or is a database connected to the information platform and provided by an information provider. An exclusive information occurrence time of the exclusive information corresponds to the time-based event record. For example, a content of the exclusive information searched by the information platform is highly related to a single event or multiple events in a calendar record or an event notification record of the subscriber, and the exclusive information occurrence time of the exclusive information is overlapped to or close to an occurrence time of the single event or the multiple events. For example, regarding a travel spot and a travel time in a calendar of a single subscriber, the content of the exclusive information searched by the information platform is, for example, real-time food discount information and time-bounded arts and cultural activity introduction related to the travel spot and the travel time.

Then, in step S205, the information platform transmits the exclusive information to at least one of the portable devices respectively corresponding to the subscribers through the communication connection according to the time-based event record. Namely, the information platform may opportunely transmit the exclusive information to the portable device corresponding to the subscriber according to an occurrence time of a single event or multiple events highly related to the content of the exclusive information in the time-based event record (for example, a calendar or an event notification record). The subscriber where the information platform transmits the exclusive information to can be a single subscriber corresponding to the personalized behavior model used for searching the exclusive information (a single point to point transmission), or can be other subscribers in the same community group with the single subscriber (multicast transmission). For example, when a birthday or a special memorial day of a specific subscriber is coming, the information platform searches exclusive information of preference objects (including events) or concerned objects (including events) of the specific subscriber according to the stored personalized behavior model corresponding to the subscriber, and transmits the exclusive information to the specific subscriber before or on the birthday or the special memorial day of the specific subscriber, or transmits the exclusive information to the portable devices corresponding to the other subscribers in the same community group with the specific subscriber to serve as a gift purchase suggestion or celebration information for the other subscribers in the same community group with the specific subscriber.

Moreover, in another embodiment, the operating information transmitted to the information platform by the portable device corresponding to the subscriber further comprises a user location information-based event record. The user location information-based event record is, for example, real-time location information, location data hidden in communication signals generated when the subscriber uses the portable device to perform communication activities (for example, making a phone call, accessing the Internet or sending a message), or a specific location where the subscriber fixedly appears. Therefore, an occurrence location of the exclusive information searched according to the personalized behavior model corresponding to the subscriber corresponds to the user location information-based event record. For example, when the operating information transmitted by the portable device corresponding to the subscriber includes location information, the occurrence location of the exclusive information (for example, a merchant address of merchant discount information) searched by the information platform is close to or overlapped to the lotion information.

Moreover, in another embodiment, the automatic information providing in the personalized information service method of the invention further includes a step S211, by which the information platform searches at least one group information from the information database according to the common behavior model of the community group. The group information includes activity information that all members of the community group are probably interested in, which may include multi people discount information, group-buying information and regional information related to locations of the members, etc. Then, in step S215, the information platform transmits the group information to the portable devices respectively corresponding to the subscribers commonly belonged to the community group through the communication connection. It should be noticed that a group information occurrence time of the group information simultaneously corresponds to the time-based event records of the subscribers commonly belonged to the community group. For example, the group information occurrence time of the group information provided by the information platform in allusion to the community group is complied to a certain mutual overlapping time period of the calendars or the event notification records of the members (subscribers) belonged to the community group, for example, the mutually overlapped work and rest time of the members, the mutually overlapped vacation time of the members, or the mutually overlapped meeting time of the members. In detail, when the information platform provides the group information of the multi people dining discount to the subscribers belonged to the same community group, an occurrence time of the multi people dining discount is opportunely a free time without other activities in the calendar of each of the subscribers of the community group.

In summary, in the personalized information service method of the invention, various behavior models of the subscribers are generated based on various behavior modes that the subscriber of the information platform uses the portable device or the user-related trip record, so that the personalized behavior models are more close to real daily activities, activity arrangements and object preferences of the subscribers. The information platform further predicts various activities and preferences of the subscribers according to the personalized behavior models belonged to the subscribers, so as to provide personalized information to a single subscriber or group exclusive information to the group subscribers in advance.

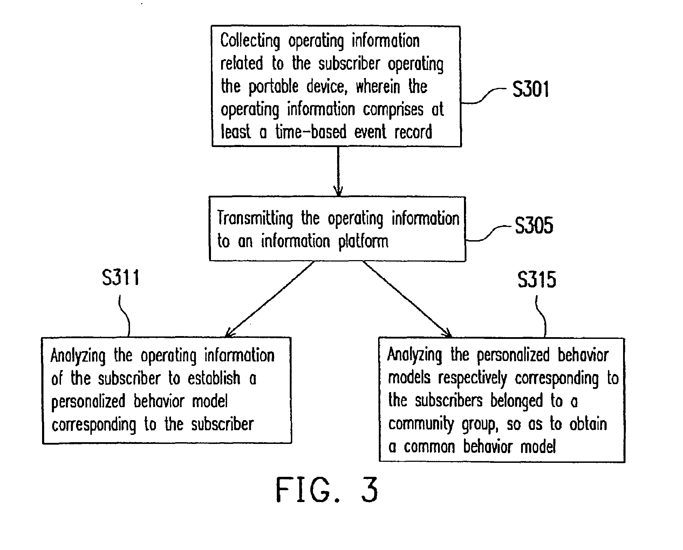

FIG. 3 is a flowchart illustrating a method for establishing a behavior model in the personalized information service method according to an embodiment of the invention. Referring to FIG. 3, when a user registers as a subscriber of the information platform for the first time, or a subscriber of the information platform deletes an original personalized behavior model and establishes a personalized behavior model, in step S301, the portable device operated by the subscriber collects operating information related to the subscriber operating the portable device. Then, in step S305, the portable device transmits the operating information to the information platform. Then, in step S311, the information platform analyses the operating information of the subscriber to establish the personalized behavior model corresponding to the subscriber, and stores the personalized behavior model.

In another embodiment, the method for establishing the behavior model of the personalized information service further includes a step S315, by which the information platform further analyses the personalized behavior models respectively corresponding to the subscribers belonged to a community group, so as to obtain a common behavior model (for example, collective behaviors of all members of the community group including dining time of the members, collective outings of the members and collective preferences of the members, etc.), and stores the common behavior model corresponding to the community group.

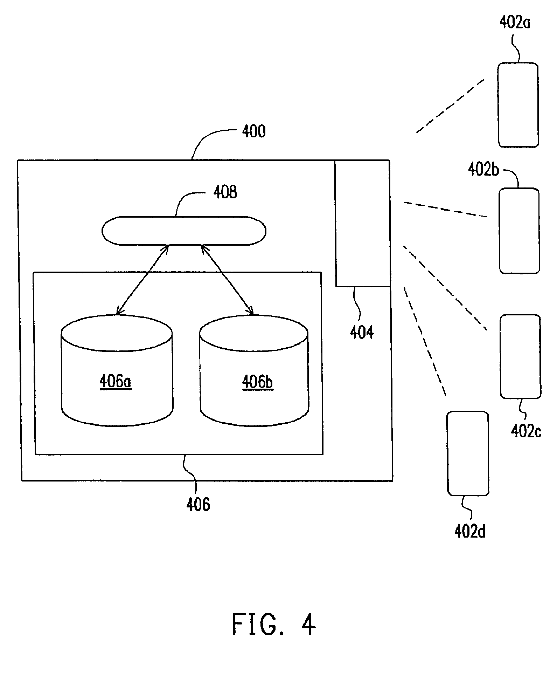

In the personalized information service method of the invention, the step that the information platform analyses the operating information to establish the personalized behavior model, adjust the personalized behavior model, establish the common behavior model or adjust the common behavior model can be implemented by executing a computer program product. In detail, referring to FIG. 4, FIG. 4 is a schematic diagram of an information platform according to an embodiment of the invention. The information platform 400 of the present embodiment has a plurality of registered subscribers (including the subscribers operating portable devices 402a, 402b, 402c and 402d), and the information platform 400 includes a communication interface 404, a storage medium 406 and a processor 408. The processor 408 is coupled to the communication interface 404 and the storage medium 406. The storage medium 406 is used for storing at least one information database 406a, a subscriber database 406b and a computer program product (not shown). The information database 406a is, for example, stored in the storage medium 406 of the information platform 400 as that shown in FIG. 4, or is a database (not shown) connected to the information platform and provided by an information provider.

The subscriber database 406b includes a plurality of personalized behavior models respectively corresponding to the subscribers. The processor 408 receives operating information related to at least one of the subscribers operating a portable device that is transmitted by the portable device used by the subscriber through the communication interface 404, and the processor 408 executes a plurality of instructions of the computer program product. After the processor 408 executes the instructions, related technical effects presented by the steps S111-S115 of the embodiment of FIG. 1, the steps S201-S205 and S201-S215 of the embodiment of FIG. 2 and the steps S311-S315 of the embodiment of FIG. 3 are implemented. Since the above steps have been described in detail in the aforementioned embodiments, detailed descriptions thereof are not repeated.

To be specific, the aforementioned personalized information service method can be implemented by a computer program product, and when the information platform loads the computer program product and executes programs contained in the computer program product, the aforementioned personalized information service method is implemented. The computer program product can be stored in a computer readable recording medium, for example, a read only memory (ROM), a flash memory, a floppy disc, a hard disc, a compact disc, a flash drive, a tape, a database capable of being accessed through a network, or any other storage medium known by those skilled in the art and having a same function.

In summary, in the personalized information service method of the invention, digital operation information is generated based on various behavior modes that the subscriber of the information platform uses the portable device or the user-related trip record, and the information platform analyses the operating information of each subscriber to periodically or non-periodically modify the personalized behavior models belonged to the subscribers, so that the personalized behavior models are more close to real daily activities, activity arrangements and object preferences of the subscribers. The information platform further predicts various activities and preferences of the subscribers according to the personalized behavior models belonged to the subscribers, so as to provide personalized information to a single subscriber or group exclusive information to group subscribers in advance. Since the information provided by the information platform is personalized and targeted, the provided information is more suitable for the subscribers, so that advertising effectiveness of the information serving as the advertising medium can be greatly improved, and the user can avoid being incessantly bothered by unnecessary information.

It will be apparent to those skilled in the art that various modifications and variations can be made to the structure of the invention without departing from the scope or spirit of the invention. In view of the foregoing, it is intended that the invention cover modifications and variations of this invention provided they fall within the scope of the following claims and their equivalents.

## Claims

1. A personalized information service method for an information platform (400) having a plurality of subscribers, wherein each of the subscribers uses a portable device (402a/b/c/d) to communicate with the information platform (400), and the information platform (400) stores a plurality of personalized behavior models, and each of the personalized behavior models corresponds to one of the subscribers, the personalized information service method comprising:
via the portable device (402a/b/c/d), collecting operating information related to the subscriber operating the portable device (402a/b/c/d), wherein the operating information at least comprises a time-based event record;
via the portable device (402a/b/c/d), receiving the operating information; and
analysing the operating information of the subscriber to adjust the personalized behavior model corresponding to the subscriber.

2. The personalized information service method as claimed in claim 1, further comprising:
searching an exclusive information from an information database according to the personalized behavior model, wherein an exclusive information occurrence time of the exclusive information corresponds to the time-based event record; and
transmitting the exclusive information to at least one of the portable devices (402a/b/c/d) respectively corresponding to the subscribers according to the time-based event record.

3. The personalized information service method as claimed in claim 2, wherein the step of transmitting the exclusive information to at least one of the portable devices (402a/b/c/d) respectively corresponding to the subscribers comprises:
transmitting the exclusive information to the portable device (402a/b/c/d) corresponding to the subscriber.

4. The personalized information service method as claimed in claim 2, wherein the step of transmitting the exclusive information to at least one of the portable devices (402a/b/c/d) respectively corresponding to the subscribers comprises:
transmitting the exclusive information to at least one of the portable devices (402a/b/c/d) respectively corresponding to other subscribers in a same community group with the subscriber.

5. The personalized information service method as claimed in claim 2, wherein the operating information further comprises a user location information-based event record, and an occurrence location of the exclusive information corresponds to the user location information-based event record.

6. The personalized information service method as claimed in claim 1, further comprising:
analysing the adjusted personalized behavior models respectively corresponding to the subscribers belonged to a community group, so as to adjust a common behavior model commonly corresponding to the subscribers of the community group.

7. The personalized information service method as claimed in claim 6, further comprising:
searching group information from the information database according to the common behavior model; and
transmitting the group information to the portable devices (402a/b/c/d) respectively corresponding to the subscribers commonly belonged to the community group.

8. The personalized information service method as claimed in claim 7, wherein a group information occurrence time of the group information simultaneously corresponds to the time-based event records of the subscribers commonly belonged to the community group.

9. An information platform (400) having a plurality of subscribers, and comprising:
a communication interface (404);
a storage medium (406), for storing at least one information database (406a), a subscriber database (406b) and a computer program product, wherein the subscriber database (406b) comprises a plurality of personalized behavior models, and each of the personalized behavior models corresponds to one of the subscribers;
a processor (408), coupled to the communication interface (404) and the storage medium (406), receiving operating information related to at least one of the subscribers operating a portable device (402a/b/c/d) that is transmitted by the portable device (402a/b/c/d) used by the subscriber, and analysing the operating information of the subscriber to adjust the personalized behavior model corresponding to the subscriber, wherein the operating information comprises at least one time-based event record.

10. The information platform (400) as claimed in claim 9, wherein the processor (408) further searches one exclusive information from the information database (406a) according to the personalized behavior model, and transmits the exclusive information to at least one of the portable devices (402a/b/c/d) respectively corresponding to the subscribers through the communication interface (404) according to the time-based event record, wherein an exclusive information occurrence time of the exclusive information corresponds to the time-based event record.

11. The information platform (400) as claimed in claim 10, wherein an instruction for transmitting the exclusive information to at least one of the portable devices (402a/b/c/d) respectively corresponding to the subscribers comprises:
transmitting the exclusive information to the portable device (402a/b/c/d) corresponding to the subscriber.

12. The information platform (400) as claimed in claim 10, wherein an instruction for transmitting the exclusive information to at least one of the portable devices (402a/b/c/d) respectively corresponding to the subscribers comprises:
transmitting the exclusive information to at least one of the portable devices (402a/b/c/d) respectively corresponding to other subscribers in a same community group with the subscriber.

13. The information platform (400) as claimed in claim 10, wherein the operating information further comprises a user location information-based event record, and an occurrence location of the exclusive information corresponds to the user location information-based event record.

14. The information platform (400) as claimed in claim 9, wherein the instructions further comprise:
analysing the adjusted personalized behavior models respectively corresponding to the subscribers belonged to a community group to adjust a common behavior model commonly corresponding to the subscribers belonged to the community group;
searching at least one group information from the information database (406a) according to the common behavior model; and
transmitting the group information to the portable devices (402a/b/c/d) respectively corresponding to the subscribers belonged to the community group through the communication interface (404).

15. The information platform (400) as claimed in claim 13, wherein a group information occurrence time of the group information simultaneously corresponds to the time-based event records of the subscribers commonly belonged to the community group.
